# DEMANDE DE BREVET EUROPEEN

(11) **EP 2 528 168 A1**
(43) Date de publication de la demande: **28.11.2012**
(21) Numéro de dépôt: 11167677.1
(22) Date de dépôt: 26.05.2011
(51) Int. Cl.: H01R 13/53, H01R 13/66, H01R 31/06, H01R 101/00, H02B 13/035

(54) **Systeme de connexion électrique muni d'un dispositif de couplage**

(71) Demandeur: Nexans, 75008 Paris (FR)
(72) Inventeur: de Ridder, Eduard, B-9310 Herdersem-Aalst (BE)
(74) Mandataire: Allain, Laurent

(57) **Abrégé**

L'invention se rapporte à un système de connexion (1) électrique pour un circuit électrique à moyenne tension, comprenant au moins un plot (5) faisant saillie dans un appareillage (2) électrique servant d'interface de connexion, au moins un connecteur (3) électrique apte à venir s'enficher autour dudit plot (5), et au moins un dispositif de couplage (4) pour la réception et la transmission de signaux d'information haute fréquence.

La principale caractéristique d'un système de connexion électrique selon l'invention est que chaque dispositif de couplage (4) est intégré dans une pièce d'interconnexion (8) indépendante, venant s'interposer entre chaque plot (5) et chaque connecteur (3).

## Description

L'invention se rapporte à un système de connexion électrique muni d'un dispositif de couplage. Le domaine technique de l'invention se situe au niveau des circuits électriques « moyenne tension » impliquant des dispositifs de couplage à moyenne tension, pour la réception ou la transmission de signaux analogiques ou numériques par l'intermédiaire d'un système de distribution de puissance électrique.

De tels dispositifs de couplage « moyenne tension » existent et ont déjà fait l'objet de brevets. On peut, par exemple, citer le brevet EP1521381, qui se rapporte à un dispositif de couplage utilisant un condensateur de couplage « moyenne tension », et un circuit de réglage, qui reçoit le signal à une tension inférieure à celle du câble à moyenne tension. La principale caractéristique de ce système de couplage est qu'il est formé par un boitier étanche à l'eau logeant le condensateur à moyenne tension, un écran servant à distribuer le champ électrique, ainsi que le circuit de réglage. Le boitier vient se placer à la partie arrière d'un connecteur électrique en étant emboité dans un espace prévu à cet effet, ledit boitier servant également de bouchon d'étanchéité à l'eau pour ledit connecteur.

Les systèmes de connexion de circuits électriques « moyenne tension », font intervenir divers appareillages ou équipements servant d'interfaces de connexion, et sur lesquels viennent s'enficher des connecteurs électriques, lesdits appareillages ou équipements étant généralement dimensionnés au plus juste de façon à réduire leur encombrement. De plus, les connecteurs électriques sont enfichés à force dans ces appareillages et ne disposent généralement pas d'un espace suffisant pour pouvoir être déconnectés facilement desdits appareillages en cas de besoin, en particulier, ils ne disposent pas d'un dégagement suffisant pour pouvoir être déplacés en arrière afin de loger ans contrainte le dispositif de couplage dans lesdits appareillages. Or, dans le cadre du rétrofitage de certaines installations électriques déjà existantes, il est prévu d'équiper les circuits électriques moyenne tension avec des dispositifs de couplage, qui viendraient se positionner au niveau de ces appareillages en liaison avec les connecteurs. Le peu d'espace disponible laissé vacant dans ces appareillages, ainsi que les difficultés à retirer les connecteurs pour pouvoir installer ces dispositifs de couplage, rendent difficiles voire impossibles ces opérations d'implantation de dispositifs de couplage.

Les systèmes de connexion électriques selon l'invention, mettent en oeuvre des connecteurs électriques, auxquels sont associés des dispositifs de couplage, dont la configuration particulière a été optimisée pour leur permettre de venir se glisser dans des espaces restreints et peu accessibles, laissés disponibles dans les appareillages électriques existants, sans avoir à modifier fondamentalement ces appareillages ou le montage des connecteurs. De cette manière, l'utilisation de tels dispositifs de couplage permet un réaménagement aisé et performant des installations électriques déjà existantes impliquant ces appareillages.

L'invention se rapporte à un système de connexion électrique pour un circuit électrique « moyenne tension », comprenant au moins un plot faisant saillie dans un appareillage électrique servant d'interface de connexion, au moins un connecteur électrique apte à venir s'enficher autour dudit plot, et au moins un dispositif de couplage pour la réception et la transmission de signaux d'information haute fréquence. La principale caractéristique technique d'un système de connexion électrique selon l'invention est que chaque dispositif de couplage est intégré dans une pièce d'interconnexion indépendante, venant s'interposer entre chaque plot et chaque connecteur. Le terme « indépendant » signifie que chaque pièce d'interconnexion n'appartient, ni à l'appareillage, ni au connecteur. De cette manière, en fonction de la géométrie de la pièce d'interconnexion, le dispositif de couplage peut venir occuper toute sorte de position au voisinage du connecteur et de l'appareillage, pour notamment venir se placer dans un emplacement étroit, laissé disponible dans l'appareillage. L'insertion d'une pièce d'interconnexion accroit la souplesse d'utilisation d'un système de connexion selon l'invention, en donnant la possibilité d'implanter des dispositifs de couplage ayant des caractéristiques différentes, et adaptées aux configurations ou contraintes rencontrées. Ainsi, en fonction d'un besoin technique bien précis et/ou de contraintes d'implantation bien identifiées, il pourra être fait recours à la pièce d'interconnexion la plus adaptée, tant au niveau structurel que fonctionnel.

De façon avantageuse, l'appareillage est de type «switchgear ». L'intégration du dispositif de couplage dans la pièce d'interconnexion est effectuée dans le souci de restreindre l'encombrement de la pièce d'interconnexion, et donc en évitant de favoriser une direction d'expansion particulière de celle-ci.

Avantageusement, la pièce d'interconnexion comprend une douille dimensionnée pour venir s'enficher autour d'un plot de l'appareillage, et un plot autour duquel est destiné à venir s'enficher un connecteur électrique. Par ce biais, la pièce d'interconnexion joue le rôle d'un adaptateur, en permettant au connecteur de se brancher sur l'appareillage dans une position décalée par rapport à celle directement offerte par chaque plot de l'appareillage. De cette manière, la pièce d'interconnexion permet d'adapter la position de connexion du connecteur, pour lui permettre de venir occuper les quelques endroits laissés disponibles sur ledit appareillage. Le plot de la pièce d'interconnexion peut avoir une forme et des dimensions différentes de celles du plot de l'appareillage, pour permettre de connecter d'autres types de connecteurs, que ceux initialement prévus. Pour cette configuration, la pièce d'interconnexion remplit non seulement une fonction de support pour le dispositif de couplage, mais également une fonction de relais électrique pour permettre au courant de circuler entre le connecteur et l'appareillage.

De façon avantageuse, la pièce d'interconnexion comprend un compartiment dans lequel est logé le dispositif de couplage, le plot de ladite pièce d'interconnexion étant situé entre la douille et ledit compartiment.

Préférentiellement, le plot, la douille et le compartiment sont alignés et s'étendent dans la même direction sur la pièce d'interconnexion. Le fait que ces trois éléments soient alignés ajoute à la compacité de la pièce d'interconnexion, en évitant une implantation aléatoire pouvant élargir significativement les dimensions de la pièce d'interconnexion. De même, une implantation de ces trois éléments du même coté de la pièce d'interconnexion structure la géométrie de ladite pièce, et contribue également à diminuer son encombrement.

Avantageusement, chaque connecteur comprend un premier segment doté d'une douille destinée à venir s'emmancher autour du plot de la pièce d'interconnexion, et un deuxième segment relié à un câble électrique et perpendiculaire au premier segment, le compartiment se retrouvant entre lesdits segments lorsque le connecteur est monté sur la pièce d'interconnexion. Ainsi, le connecteur monté sur la pièce d'interconnexion offre un encombrement compact, le plus réduit possible, en positionnant le dispositif de couplage dans l'espace disponible situé entre les deux segments du connecteur.

De façon préférentielle, le dispositif de couplage comprend un condensateur de couplage, et la pièce d'interconnexion comporte un conducteur interne reliant ledit condensateur à la douille de ladite pièce d'interconnexion.

De façon avantageuse, chaque dispositif de couplage est doté d'un circuit électronique comprenant au moins un diviseur de tension, au moins un élément de protection, et un filtre à hautes fréquences.

Préférentiellement, la pièce d'interconnexion possède une paroi externe revêtue d'une couche semi-conductrice.

Avantageusement, la pièce d'interconnexion est munie d'un capteur de courant.

L'invention se rapporte également à une pièce d'interconnexion pour la mise en oeuvre d'un système de connexion électrique selon l'invention.

Les systèmes de connexion électrique selon l'invention présentent le double avantage d'être performants, car ils intègrent au moins un dispositif de couplage, et d'être peu encombrants dans la mesure où chaque dispositif de couplage est intégré dans une pièce d'interconnexion formant avec le connecteur un objet compact. Ils ont de plus l'avantage d'être souples d'utilisation, car la pièce d'interconnexion peut être conçue individuellement pour répondre à des besoins spécifiques, tant au niveau structurel, pour des raisons de géométrie et d'encombrement, que fonctionnel, pour des raisons de performances liées au dispositif de couplage.

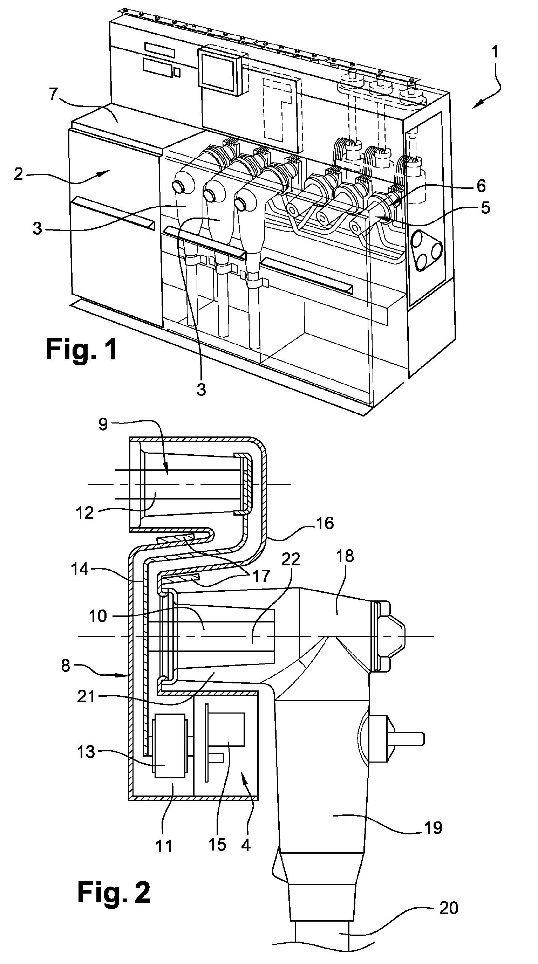

On donne ci-après une description détaillée d'un mode de réalisation préféré d'un système de connexion et d'un ensemble connecteur/pièce d'interconnexion selon l'invention, en se référant aux figures 1 et 2.
- La figure 1 est une vue en perspective d'un système de connexion électrique selon l'état de la technique, et montrant l'exiguïté des espaces laissés vacants sur un appareillage de connexion,
- La figure 2 est une vue en coupe d'un ensemble pièce d'interconnexion /connecteur électrique utilisé dans un système de connexion électrique selon l'invention,

En se référant à la figure 1, un système de connexion 1 selon l'état de la technique et réalisé dans le cadre de la mise en oeuvre de circuits électriques « moyenne tension », impliquent un appareillage électrique 2 de type « switchgear » et des connecteurs électriques 3 prévus pour venir s'enficher dans ledit appareillage 2. Chaque circuit électrique « moyenne tension », comprenant un connecteur électrique 3, est également équipé d'un dispositif de couplage 4 permettant de récupérer ou de transmettre des signaux analogiques et/ou numériques « hautes fréquences ». L'appareillage 2 est doté d'une pluralité de plots 5 métalliques, assimilables à des pièces creuses tronconiques et munies chacune d'un socle 6 de fixation circulaire. Ces plots 5 sont droits, et saillent perpendiculairement de la surface 7 sur laquelle ils sont implantés. Un tel appareillage électrique 2 possède ainsi six plots métalliques 5, alignés selon une direction horizontale de l'appareillage 2. Chaque circuit électrique « moyenne tension » est relié audit appareillage 2 par l'intermédiaire d'un connecteur électrique 3, venant s'enficher autour d'un plot 5 dudit appareillage 2. Les connecteurs 3 ainsi enfichés dans l'appareillage 2, sont très difficiles à déplacer vers l'arrière, par manque d'espace de dégagement, pour notamment accéder aux quelques rares espaces libres laissés disponibles dans ledit appareillage 2 et implanter ainsi un dispositif de couplage 4.

En se référant à la figure 2, un système de connexion selon l'invention, met en oeuvre une pièce d'interconnexion 8 insérée entre un plot 5 de l'appareillage électrique 2 et un connecteur 3 électrique prévu initialement pour venir s'enficher sur ledit plot 5, ladite pièce 8 comprenant le dispositif de couplage 4. De façon générale, l'appareillage 2 comporte plusieurs plots 5, sur chacun desquels peut venir se brancher un connecteur électrique 3, chaque connecteur 3 en liaison avec le plot 5 sur lequel il est monté, définissant un circuit électrique particulier. Dans un souci de clarification et donc de meilleure compréhension de l'invention, la suite de la description sera focalisée sur un seul couple connecteur 3/plot électrique 5, bien que l'appareillage puisse en impliquer plusieurs. La pièce d'interconnexion 8 est constituée de trois éléments majeurs, qui sont une douille 9, un plot 10 et un compartiment 11 logeant le dispositif de couplage 4. La douille 9 est une pièce creuse de forme conique, définissant un canal interne 12 de section progressive et destiné à recevoir un plot 5 de l'appareillage 2 électrique, lui aussi de forme conique, lorsque ladite pièce d'interconnexion 8 est solidarisée à l'appareillage 2. Le plot 10 porté par la pièce d'interconnexion 8 est identique aux plots 5 de l'appareillage 2 électrique, tant au niveau de sa forme que de ses dimensions. Le compartiment 11 logeant le dispositif de couplage 4 est délimité par une paroi 12 cylindrique, dont l'axe de révolution est parallèle à l'axe de révolution du plot 10 porté par la pièce d'interconnexion 8, et est parallèle à l'axe de révolution de la douille 9. La douille 9, le 10 et le compartiment 11 ont une longueur sensiblement identique, la longueur étant leur dimension prise suivant leur axe de révolution. Le dispositif de couplage 4 comprend de façon conventionnelle, un condensateur de couplage 13 relié électriquement à la première douille 9 par un conducteur interne 14, et un circuit électronique 15 comportant divers éléments, comme par exemple, un filtre hautes fréquences, un élément de protection prévu pour protéger le circuit électrique dans le cas d'une tension trop excessive, et un diviseur de courant. Le plot 10 est positionné sur la pièce d'interconnexion 8, entre la douille 9 et le compartiment 11 logeant le dispositif de couplage 4, ces trois éléments 9,10,11 étant alignés entre eux. La pièce d'interconnexion 8 dispose d'une enveloppe externe 16 revêtue d'une couche semi-conductrice et reliant ces trois éléments 9,10,11 entre eux, et d'un capteur de courant 17 placé au contact de ladite enveloppe externe 16. Un connecteur électrique 3 possède deux segments perpendiculaires 18,19, le premier segment 18 étant dimensionné pour venir s'enficher autour du plot 10 de la pièce d'interconnexion 8, et le deuxième segment 19 étant prolongé par un câble électrique 20 constituant le circuit électrique. Le premier segment 18 possède une douille 21 tronconique et creuse, dont le canal interne 22 est prévu pour loger le plot 10 de ladite pièce d'interconnexion 8, lorsque le connecteur 3 est solidarisé à ladite pièce 8. Un système de connexion selon l'invention est établi en enfichant la pièce d'interconnexion 8 autour d'un plot 5 de l'appareillage 2, la douille 9 se positionnant à force autour dudit plot 5. Le connecteur électrique 3 est alors enfiché autour du plot 10 porté par ladite pièce d'interconnexion 8 pour fermer le circuit électrique. De cette manière, la pièce d'interconnexion 8 joue le rôle d'un adaptateur permettant de décaler selon la direction voulue, la position de connexion du connecteur 3 sur l'appareillage 2, et joue également le rôle d'une pièce support en incorporant notamment le dispositif de couplage 4. Suivant les configurations et contraintes rencontrées, le système de connexion selon l'invention peut être établi, soit en connectant d'abord le connecteur 3 à la pièce d'interconnexion 8, puis en connectant ladite pièce 8 à l'appareillage 2, ou en inversant ces deux étapes. Ainsi, en fonction de la position des espaces disponibles dans l'appareillage 2, la pièce d'interconnexion 8 peut adopter la géométrie appropriée permettant au connecteur 3 et au dispositif de couplage porté par ladite pièce 4, de venir occuper avantageusement lesdits espaces. De même, en fonction des performances recherchées pour le dispositif de couplage 4 par rapport au circuit électrique « moyenne tension » considéré, la pièce d'8 pourra être conçue avec le dispositif de couplage 4 idoine, et venir se connecter de façon indépendante et tout aussi facilement à l'appareillage électrique 2.

## Revendications

1. Système de connexion (1) électrique pour un circuit électrique à moyenne tension, comprenant au moins un plot (5) faisant saillie dans un appareillage (2) électrique servant d'interface de connexion, au moins un connecteur (3) électrique apte à venir s'enficher autour dudit plot (5), et au moins un dispositif de couplage (4) pour la réception et la transmission de signaux d'information haute fréquence, **caractérisé en ce que** chaque dispositif de couplage (4) est intégré dans une pièce d'interconnexion (8) indépendante, venant s'interposer entre chaque plot (5) et chaque connecteur (3).

2. Système de connexion selon la revendication 1, **caractérisé en ce que** la pièce d'interconnexion (8) comprend une douille (9) dimensionnée pour venir s'enficher autour d'un plot (5) de l'appareillage (2), et un plot (10) autour duquel est destiné à venir s'enficher un connecteur électrique (3).

3. Système de connexion selon la revendication 2, **caractérisé en ce que** la pièce d'interconnexion (8) comprend un compartiment (11) dans lequel est logé le dispositif de couplage (4), et **en ce que** le plot (10) de ladite pièce d'interconnexion (8) est situé entre la douille (9) et ledit compartiment (11).

4. Système de connexion selon la revendication 3, **caractérisé en ce que** le plot (10), la douille (9) et le compartiment (11) sont alignés et s'étendent dans la même direction sur la pièce d'interconnexion(8).

5. Système de connexion selon l'une quelconque des revendications 2 à 4, **caractérisé en ce que** chaque connecteur (3) comprend un premier segment (18) doté d'une douille (21) destinée à venir s'emmancher autour du plot (10) de la pièce d'interconnexion (8), et un deuxième segment (19) relié à un câble électrique (10) et perpendiculaire au premier segment (18), et **en ce que** le compartiment (11) se retrouve entre lesdits segments (18,19) lorsque le connecteur (3) est monté sur la pièce d'interconnexion (8).

6. Système de connexion selon l'une quelconque des revendications 2 à 5, **caractérisé en ce que** le dispositif de couplage (4) comprend un condensateur (13) de couplage, et **en ce que** la pièce d'interconnexion(8) comporte un conducteur (14) interne reliant ledit condensateur (13) à la douille (9) de ladite pièce d'interconnexion (8).

7. Système de connexion selon l'une quelconque des revendications 1 à 6, **caractérisé en ce que** chaque dispositif de couplage (4) est doté d'un circuit électronique (15) comprenant au moins un diviseur de tension, au moins un élément de protection, et un filtre hautes fréquences.

8. Système de connexion selon l'une quelconque des revendications 1 à 7, **caractérisé en ce que** la pièce d'interconnexion (8) possède une paroi externe (16) revêtue d'une couche semi-conductrice.

9. Système de connexion selon l'une quelconque des revendications 1 à 8, **caractérisé en ce que** la pièce d'interconnexion (8) est munie d'un capteur de courant (17).

10. Pièce d'interconnexion (8) pour la mise en oeuvre d'un système de connexion électrique conforme à l'une quelconque des revendications 1 à 10.

## Revendications modifiées

### Revendications modifiées conformément à la règle 137(2) CBE.

**1.** Système de connexion (1) électrique pour un circuit électrique à moyenne tension, comprenant au moins un plot (5) faisant saillie dans un appareillage (2) électrique servant d'interface de connexion, au moins un connecteur (3) électrique apte à venir s'enficher autour dudit plot (5), et au moins un dispositif de couplage (4) pour la réception et la transmission de signaux d'information haute fréquence, chaque dispositif de couplage (4) étant intégré dans une pièce d'interconnexion (8) indépendante, venant s'interposer entre chaque plot (5) et chaque connecteur (3), **caractérisé en ce que** la pièce d'interconnexion (8) comprend une douille (9) dimensionnée pour venir s'enficher autour d'un plot (5) de l'appareillage (2), et un plot (10) autour duquel est destiné à venir s'enficher un connecteur électrique (3).

**2.** Système de connexion selon la revendication 1, **caractérisé en ce que** la pièce d'interconnexion (8) comprend un compartiment (11) dans lequel est logé le dispositif de couplage (4), et **en ce que** le plot (10) de ladite pièce d'interconnexion (8) est situé entre la douille (9) et ledit compartiment (11).

**3.** Système de connexion selon la revendication 2, **caractérisé en ce que** le plot (10), la douille (9) et le compartiment (11) sont alignés et s'étendent dans la même direction sur la pièce d'interconnexion(8).

**4.** Système de connexion selon l'une quelconque des revendications 1 à 3, **caractérisé en ce que** chaque connecteur (3) comprend un premier segment (18) doté d'une douille (21) destinée à venir s'emmancher autour du plot (10) de la pièce d'interconnexion (8), et un deuxième segment (19) relié à un câble électrique (10) et perpendiculaire au premier segment (18), et **en ce que** le compartiment (11) se retrouve entre lesdits segments (18,19) lorsque le connecteur (3) est monté sur la pièce d'interconnexion (8).

**5.** Système de connexion selon l'une quelconque des revendications 1 à 4, **caractérisé en ce que** le dispositif de couplage (4) comprend un condensateur (13) de couplage, et **en ce que** la pièce d'interconnexion(8) comporte un conducteur (14) interne reliant ledit condensateur (13) à la douille (9) de ladite pièce d'interconnexion (8).

**6.** Système de connexion selon l'une quelconque des revendications 1 à 5, **caractérisé en ce que** chaque dispositif de couplage (4) est doté d'un circuit électronique (15) comprenant au moins un diviseur de tension, au moins un élément de protection, et un filtre hautes fréquences.

**7.** Système de connexion selon l'une quelconque des revendications 1 à 6, **caractérisé en ce que** la pièce d'interconnexion (8) possède une paroi externe (16) revêtue d'une couche semi-conductrice.

**8.** Système de connexion selon l'une quelconque des revendications 1 à 7, **caractérisé en ce que** la pièce d'interconnexion (8) est munie d'un capteur de courant (17).

**9.** Pièce d'interconnexion (8) pour la mise en oeuvre d'un système de connexion électrique conforme à l'une quelconque des revendications 1 à 8.
